# EUROPEAN PATENT APPLICATION

(11) **EP 2 003 350 A2**
(43) Date of publication of application: **17.12.2008**
(21) Application number: 07740845.8
(22) Date of filing: 02.04.2007
(51) Int. Cl.: F16C 33/10, C10M 105/12, C10M 105/14, C10M 107/36, F16C 33/24, C10N 30/06, C10N 40/04, C10N 40/18, C10N 40/25

(54) **LOW-FRICTION SLIDING MECHANISM**

(30) Priority: 04.04.2006 JP 2006102831; 02.03.2007 JP 2007052227
(71) Applicant: Nissan Motor Co., Ltd., Kanagawa 221-0023 (JP); MARTIN, Jean-Michel, 69380 Chazay d'Azergues (FR)
(72) Inventor: MARTIN, Jean Michel, 69380 Chazay d'Azergues (FR); KANO, Makoto c/o Intellectual Property Department NISSAN MOTOR CO., LTD., Kanagawa 243-0123 (JP); SAGAWA, Takumaru c/o Int. Property Department NISSAN MOTOR CO., LTD., Kanagawa 243-0123 (JP); WATANABE, Masahiko c/o Int. Property Department NISSAN MOTOR CO., LTD., Kanagawa 243-0123 (JP)
(74) Representative: Schaeberle, Steffen
(86) International application number: PCT/JP2007/057409
(87) International publication number: WO 2007/116861

(57) **Abstract**

[Object] To provide a low-friction sliding mechanism capable of exhibiting an extremely excellent ultra-low friction characteristics at a sliding face existing in a variety of uses.

[Solving means] A low-friction sliding mechanism is constituted by disposing a lubricant containing glycerol, at a sliding face formed between sliding members which have respectively hard carbon thin films. A low-friction sliding mechanism is constituted by disposing a lubricant containing hydroxyl group, at a sliding face formed between sliding members which have respectively hard carbon thin films, wherein a friction coefficient of smaller than 0.02 is exhibited in a sliding contacting condition under a boundary lubrication which exhibits a friction coefficient of 0.1 to 0.14 at a sliding face between a steel and a steel in presence of an engine oil. Each hard carbon thin film is formed of a-C or ta-C. Each hard carbon thin film has a hardness of 1500 to 5000 Hv in micro-Vickers hardness under a load of 10 g. Each hard carbon thin film has a film thickness of 0.3 to 2.0 µm. The lubricant containing hydroxyl group is one of alcohols, and is glycerol.

## Description

### TECHNICAL FIELD

This invention relates to a low-friction sliding mechanism, and more particularly to a low-friction sliding mechanism capable of improving a friction characteristics of a variety of sliding faces, for example, in an internal combustion engine or a drive-system transmission machine.

### BACKGROUND ART

Global environmental problems such as global warming and ozone layer destruction of whole the earth are coming to the fore. As it has been said that the global warming is significantly affected by CO₂ emission, the reduction of CO₂ emission, notably the setting of CO₂ emission standards, has become a big concern to each country.
One of challenges to reduce CO₂ emission is to lower an energy loss due to friction loss of machines, facilities and the like, particularly to improve a fuel economy of motor vehicles, in which sliding materials and lubricants play important roles.

The roles of the sliding materials are to demonstrate an excellent wear resistance and a low friction coefficient in a section severe in frictional condition, sliding sections of an engine, an electric motor, a fuel pump and the like, in which application of a variety of hard thin films are recently proceeding.
In general, a DLC (diamond-like carbon) material is low in friction coefficient in air and in the absence of lubricating oil as compared with abrasion-resistant hard coating materials such as titanium nitride (TiN) and chromium nitride (CrN), and therefore it is expected as a low friction sliding material.

As fuel economy improving measures or the role played by the lubricating oil, the following are proposed: (1) lowering the viscosity of the lubricating oil, thereby reducing viscous resistance in hydrodynamic lubrication regions and agitation resistance in the engine; and (2) adding an optimum friction modifier and various additives into the lubricating oil so as to reduce friction losses under the conditions of mixed lubrication and boundary lubrication.
For example, for the friction modifier, many studies have been made on and around organic molybdenum compounds such as molybdenum dithiocarbamate (MoDTC) and molybdenum dithiophosphate (MoDTP). As a result of the studies, a lubricating oil composition blended with the organic molybdenum compound demonstrating an excellent low friction coefficient at an initial period in use is applied so as to be effective.

Such a friction characteristics of the DLC material and a performance of the organic molybdenum compound as the friction modifier are reported by, for example, non-patent literatures 1 and 2.
Non-patent literature 1: Japan Tribology Congress preliminary theses, May 1999, Tokyo, Pages 11-12, KANO et al.
Non-patent literature: World Tribology Congress 2001. 9, Vienna, Proceeding Page 342, KANO et al.

Additionally, it has been proposed to obtain a large friction reduction by lubricating a DLC and an iron-based material, an aluminum alloy, a magnesium alloy or a DLC material with an oil agent containing an ester-based additive or the like (see, for example, Patent literatures 1 to 4).
Patent literature 1: Patent Provisional Publication No. 2002-45576
Patent literature 2: Patent Provisional Publication No. 2002-322322
Patent literature 3: Patent Provisional Publication No. 2003-208193
Patent literature 4: Patent Provisional Publication No. 2003-207056

### DISCLOSURE OF THE INVENTION

### PROBLEMS TO BE SOLVED BY THE INVENTION

However, in the non-patent literature 1, it is reported that general DLC materials excellent in low friction characteristics in air are not always high in friction reduction effect in the presence of a lubricating oil.
Additionally, in the non-patent literature 2, it is understood that there is such a possibility that a friction reduction effect cannot be sufficiently demonstrated even if a lubricating oil composition containing an organic molybdenum compound is applied to such a sliding material.
Further, in the above-mentioned patent literatures, it is not disclosed to demonstrate a super friction characteristics in which a friction coefficient exceeds a level of 1/1000 (smaller than 0.01).

This invention has been made in view of such problems of the conventional techniques and is intended to provide a low-friction sliding mechanism in which sliding faces existing under various applications can exhibit a highly excellent ultra-low friction characteristics.

### MEANS FOR SOLVING THE PROBLMS

As a result of eagerly conducted studies in order to solve the above-mentioned problems, the present inventors have reached completion of the present invention upon finding to solve the above-mentioned problems by combining a lubricant containing hydroxyl group with sliding members which have respectively hard carbon thin films thereby forming a very thin and low shearing stress compound at the surfaces of the members.

In other words, a low-friction sliding mechanism according to the present invention is a low-friction sliding mechanism characterized in that a lubricant containing glycerol exists at a sliding face which is formed between sliding members which respectively have hard carbon thin films, or scharacterized in that a friction coefficient of smaller than 0.02 is exhibited in a sliding contacting condition under a boundary lubrication which exhibits a friction coefficient of 0.1 to 0.14 at a sliding face between steels in the presence of an engine oil, at the sliding face which is formed between sliding members which respectively have hard carbon thin films.

Additionally, a preferable embodiment of the low-friction sliding mechanism according to the present invention is characterized in that the above-mentioned hard carbon thin film is a diamond-like carbon thin film formed of amorphous carbon (a-C) and/or tetrahedral carbon (ta-C).

Further, another preferable embodiment of the low-friction sliding mechanism according to the present invention is characterized in that the hard carbon thin film has a hardness of 1500 to 5000 Hv in micro-Vickers hardness under a load of 10 g, and the hard carbon thin film has a film thickness of 0.3 to 2.0 µm.

Furthermore, a further preferable embodiment of the low-friction sliding mechanism according to the present invention is characterized in that the above-mentioned lubricant containing hydroxyl group is one of alcohols, particularly glycerol.

### EFFECTS OF THE INVENION

The low-friction sliding mechanism according to the present invention is constituted by combining a lubricant containing glycerol with sliding members which respectively have hard carbon thin films thereby forming a very thin and low shearing stress compound, so as to making is possible to exhibit an extremely excellent ultra-low friction characteristics at a sliding face existing in a variety of uses.

### THE BEST MODE FOR CARRYING OUT THE INVENTION

Hereinafter, the low-friction sliding mechanism according to the present invention will be discussed further in detail. In the specification and claims, [%] for concentration, content, filled amount and the like is represented by "mass percent" unless otherwise specified.

As discussed above, the low-friction sliding mechanism according to the present invention is constituted by disposing a lubricant containing glycerol or a lubricant containing hydroxyl group to a sliding face formed between sliding members which respectively have hard carbon thin films.
Additionally, a friction coefficient of not less than 0.02 is exhibited in a sliding contacting condition at the sliding face under a boundary lubrication which exhibits a friction coefficient of 0.1 to 0.14 at a sliding face between steels in the presence of an engine oil.

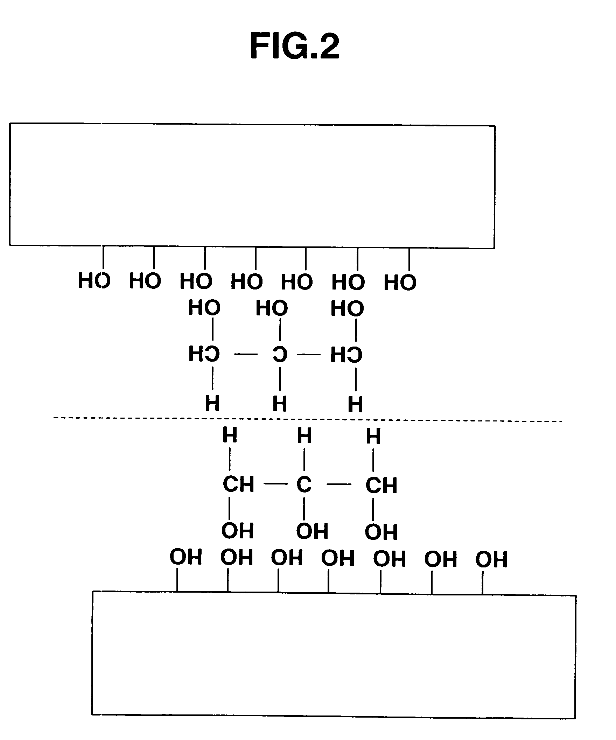

With such a configuration, an organic compound layer having hydroxyl group and very low in shearing stress is formed at the surface of the sliding member, thereby exhibiting a ultra-low friction characteristics.
A mechanism for forming this organic compound layer is not apparent at the present time; however, it is assumed that hydrogen group and hydrogen group face each other thereby to form a sliding interface of a tribo-film at the sliding face. For example, as shown in Fig. 2, it is considered that hydrogen groups forming part of glycerol face each other thereby forming a sliding interface under hydrogen-bonding, when glycerol is used as a lubricant.

Here, the above-mentioned sliding member is formed by coating a base material with a hard carbon thin film.
Examples of the hard carbon thin film are crystalline or amorphous thin films containing carbon, particularly a diamond thin film, a diamond-like carbon (DLC) thin film, and the like.
This hard carbon thin film is preferably formed at whole the sliding section of the sliding member and may be formed at a part of the sliding section.

The above-mentioned DLC thin film is constituted of a so-called DLC material. This DLC material is an amorphous material principally formed of carbon atom and includes two carbon-to-carbon bonding modes of a diamond structure (sp³ bonding) and a graphite structure (sp² bonding).
A specific example of the DLC material is a-C (amorphous carbon) based material formed substantially of only carbon; however, a ta-C (Tetrahedral Type amorphous carbon) based material mainly formed of sp² bonding may be suitably used.

The above-mentioned hard carbon thin film are affected by kinds and required performances of objective sliding mechanisms, kinds of materials constituting the sliding member, surface roughness of the sliding section, and the like. For example, the hard carbon thin film preferably has a surface hardness of 1500 to 5000 Hv in micro-Vickers hardness under a load of 10 g. The surface hardness is more preferably 2000 to 4000 Hv, and particularly preferably 2500 to 3500 Hv.
Additionally, the above-mentioned hard carbon thin film preferably has a film thickness of 0.3 to 2.0 µm. The film thickness is more preferably 0.5 to 1.5 µm and particularly preferably 0.7 to 1.2 µm.
If the surface hardness and film thickness are outside the above-mentioned range so as to be smaller than 1500 Hv in hardness and 0.3 µm in thickness, abrasion tends to occur. To the contrary, if they are outside the above-mentioned range so as to exceed 3500 Hv in hardness and 2.0 µm in thickness, peeling tends to occur.

Further, the above-mentioned hard carbon thin film has a surface roughness in Ra (according to JIS), preferably of not larger than 1 µm, more preferably of not larger than 0.05 µm, particularly preferably not larger than 0.03 µm. If Ra exceeds 1 µm, scuffing is locally formed, thereby resulting in the possibility of largely increasing the friction coefficient.

The base material of the above-mentioned sliding members is not particularly restricted, so that examples thereof are metal materials and the like such as a ferrous material, an aluminum-based material, a magnesium-based material, a titanium-based material and the like. Examples of the base material are also resinous materials such as various rubbers, plastics, non-metal materials such as carbon and the like, and the like.
Particularly, the ferrous material, the aluminum-based material and the magnesium-based material are preferable from the viewpoints of being readily applicable to the sliding sections of existing machines, apparatuses and the like and of capable of extensively contributing to energy saving measures in various fields.

The above-mentioned ferrous material is not particularly restricted, and therefore not only iron of high purity but also various ferrous alloys (containing nickel, copper, zinc, chromium, cobalt, molybdenum, lead, silicon or titanium, any combination thereof, or the like) can be used. Specific examples include carburized steel SCM 420, SCr 420 (according to JIS) and the like.
The above-mentioned aluminum-based material is not particularly restricted, and therefore not only aluminum of high purity but also various aluminum-based alloys can be sued. Specifically, a hypo-eutectic or hyper-eutectic aluminum alloy and the like containing, for example, silicon (Si) by 4 to 20 % and copper (Cu) by 1.0 to 5.0 % is preferable. Preferred examples of the aluminum alloy include AC2A, AC8A, ADC12, ADC14 (according to JIS) and the like.

Further, a material formed by applying a thin film coating of various kinds on these metal materials or non-metal materials can be used as the base material. Specific examples of the material are various metal materials such as the ferrous material, the aluminum-based material, the magnesium-based material or the titanium-based material mentioned above with a thin film coating of TiN, CrN or the like.

As the sliding face formed between the above-mentioned sliding members, all sliding faces each of which is formed between the surfaces of two sliding members in such a manner that a lubricant containing hydroxyl group exists at the sliding face can be used without restriction. Examples of the sliding face are sliding faces at sliding sections in an internal combustion engine of a 4 stroke cycle engine or a 2 stroke cycle engine (for example, a valve driving system, a piston, a piston ring, a piston skirt, a cylinder liner, a connecting rod, a crank shaft, a bearing, a roller bearing, a bearing metal, a gear, a chain, a belt, an oil pump and the like), also at sliding sections in a drive system transmission mechanism (for example, gears and the like), sliding sections in a hard disc drive, and other various sliding faces which are severe in frictional conditions and requiring low friction characteristics.

The above-mentioned lubricant containing hydroxyl group is not particularly restricted if it is an organic compound whose molecule contains hydroxyl group.
The lubricant containing hydroxyl group may be, for example, an organic compound is constituted of carbon, hydrogen and oxygen, and may be an organic compound containing elements other than the carbon, hydrogen and oxygen, such as nitrogen, sulfur, halogen (fluorine, chlorine and the like), phosphorus, boron, a metal and the like.
Particularly from the viewpoint of further reducing the friction at the sliding face, it is preferable that the lubricant containing hydroxyl group is one of alcohols. Additionally, the alcohols have two or more hydroxyl groups in a molecule, so that glycerol and the like are preferably used. For the same reason, the lubricant containing hydroxyl group is preferably an organic compound which is less in sulfur content or contains no sulfur.

Here, the above-mentioned alcohols are organic compounds represented by the following general formula (1):

R-(OH)ₙ ...(1)

Examples of the organic compounds are compounds having one or two hydroxyl groups in a molecule.

Specific examples of alcohols are (A) to (D) set forth below.
- Monoalcohols (A)
- Dialcohols (B).
- Tri and higher polyalcohols (C).
- Mixtures of one kind or more kinds selected from the above-mentioned three kinds of alcohols (D)

The above-mentioned monoalcohols (A) have one hydroxyl group in a molecule, and include, for example, monohydric alkyl alcohols having 1 to 40 carbon atoms (in which the alkyl group may be linear or branched) such as methanol, ethanol, propanol (1-propanol, 2-propanol), butanol (1-butanol, 2-butanol, 2-methyl-1-propanol, 2-methyl-2-propanol), pentanol (1-pentanol, 2-pentanol, 3-pentanol, 2-methyl-1-butanol, 3-methyl-1-butanol, 3-methyl-2-butanol, 2-methyl-2-butanol, 2,2-dimethyl-1-propanol), hexanol (1-hexanol, 2-hexanol, 3-hexanol, 2-methyl-1-pentanol, 2-methyl-2-pentanol, 2-methyl-3-pentanol, 3-methyl-1-pentanol, 3-methyl-2-pentanol, 3-methyl-3-pentanol, 4-methyl-1-pentanol, 4-methyl-2-pentanol, 2,3-dimethyl-1-butanol, 2,3-dimethyl-2-butanol, 3,3-dimethyl-1-butanol, 3,3-dimethyl-2-butanol, 2-ethyl-1-butanol, 2,2-dimethylbutanol), heptanol (1-heptanol, 2-heptanol, 3-heptanol, 2-methyl-1-hexanol, 2-methyl-2-hexanol, 2-methyl-3-hexanol, 5-methyl-2-hexanol, 3-ethyl-3-pentanol, 2,2-dimethyl-3-pentanol, 2,3-dimethyl-3-pentanol, 2,4-dimethyl-3-pentanol, 4,4-dimethyl-2-pentanol, 3-methyl-1-hexanol, 4-methyl-1-hexanol, 5-methyl-1-hexanol, 2-ethylpentanol), octanol (1-octanol, 2-octanol, 3-octanol, 4-methyl-3-heptanol, 6-methyl-2-heptanol, 2-ethyl-1-hexanol, 2-propyl-1-pentanol, 2,4,4-trimethyl-1-pentanol, 3,5-dimethyl-1-hexanol, 2-methyl-1-heptanol, 2,2-dimethyl-1-hexanol), nonanol (1-nonanol, 2-nonanol, 3,5,5-trimethyl-1-hexanol, 2,6-dimethyl-4-heptanol, 3-ethyl-2,2-dimethyl-3-pentanol, 5-methyloctanol, and the like), decanol (1-decanol, 2-decanol, 4-decanol, 3,7-dimethyl-1-octanol, 2,4,6-trimethylheptanol, etc.), undecanol, dodecanol, tridecanol, tetradecanol, pentadecanol, hexadecanol, heptadecanol, octadecanol (stearyl alcohol, and the like), nonadecanol, eicosanol, heneicosanol, tricosanol, tetracosanol; monohydric alkenyl alcohols having 2 to 40 carbon atoms (in which the alkenyl group may be linear or branched, and the double bond may be in any desired position) such as ethenol, propenol, butenol, hexenol, octenol, decenol, dodecenol, octadecenol (oleyl alcohol, and the like); monohydric (alkyl)cycloalkyl alcohols having 3 to 40 carbon atoms (in which the alkyl group may be linear or branched, and the alkyl group and the hydroxyl group may be in any desired position) such as cyclopentanol, cyclohexanol, cycloheptanol, cyclooctanol, methylcyclopentanol, methylcyclohexanol, dimethylcyclohexanol, ethylcyclohexanol, propylcyclohexanol, butylcyclohexanol, dimethylcyclohexanol, cyclopentylmethanol, cyclohexylmethanol, cyclohexylethanol (1-cyclohexylethanol, 2-cyclohexylethanol, and the like), cyclohexylpropanol (3-cyclohexylpropanol, and the like), cyclohexylbutanol (4-cyclohexylbutanol, and the like) butylcyclohexanol, 3,3,5,5-tetramethylcyclohexanol, and the like; (alkyl)aryl alcohols (in which the alkyl group may be linear or branched, and the alkyl group and the hydroxyl group may be in any desired position) such as phenyl alcohol, methylphenyl alcohol (o-cresol, m-cresol, p-cresol), creosol, ethylphenyl alcohol, propylphenyl alcohol, butylphenyl alcohol, butylmethylphenyl alcohol (3-methyl-6-tert-butylphenyl alcohol, and the like), dimethylphenyl alcohol, diethylphenyl alcohol, dibutylphenyl alcohol (2,6-di-tert-butylphenyl alcohol, 2,4-di-tert-butylphenyl alcohol, and the like), dibutylmethylphenyl alcohol (2,6-di-tert-butyl-4-methylphenyl alcohol, and the like), dibutylethylphenyl alcohol (2,6-di-tert-butyl-4-ethylphenyl alcohol, and the like), tributylphenyl alcohol (2,4,6-tri-tert-butylphenyl alcohol, etc.), naphthol (α-naphthol, β-naphthol, and the like), dibutylnaphthol (2,4-di-tert-butyl-α-naphthol, and the like), and the like; 6-(4-hydroxy-3,5-di-tert-butylanilino)-2,4-bis(n-octylthio)-1,3,5-triazine, and the like; and their mixtures.

Of these monoalcohols, linear or branched alkyl or alkenyl alcohols having from 12 to 18 carbon atoms such as oleyl alcohol and stearyl alcohol are more preferable to be used from the viewpoints of more effectively reducing the friction at the sliding face and from the viewpoint of being low in volatility and of capable of exhibiting a friction reduction effect even at a high temperature condition, for example, a sliding condition in an internal combustion engine or the like.

Dialcohols (B) are concretely those having two hydroxyl groups in the molecule, and include, for example, alkyl or alkenyldiols having 2 to 40 carbon atoms (in which the alkyl or alkenyl group may be linear or branched, the double bond of the alkenyl group may be in any desired position, and the hydroxyl group may also be in any desired position) such as ethylene glycol, diethylene glycol, polyethylene glycol, propylene glycol, dipropylene glycol, polypropylene glycol, neopentyl glycol, 1,3-propanediol, 1,4-butanediol, 1,2-butanediol, 2-methyl-1,3-propanediol, 1,5-pentanediol, 1,6-hexanediol, 2-ethyl-2-methyl-1,3-propanediol, 2-methyl-2,4-pentanediol, 1,7-heptanediol, 2-methyl-2-propyl-1,3-propanediol, 2,2-diethyl-1,3-propanediol, 1,8-octanediol, 1,9-nonanediol, 2-butyl-2-ethyl-1,3-propanediol, 1,10-decanediol, 1,11-undecanediol, 1,12-dodecanediol, 1,13-tridecanediol, 1,14-tetradecanediol, 1,15-heptadecanediol, 1,16-hexadecanediol, 1,17-heptadecanediol, 1,18-octadecanediol, 1,19-nonadecanediol, 1,20-eicosadecanediol, and the like; (alkyl)cycloalkanediols (in which the alkyl group may be linear or branched, and the alkyl group and the hydroxyl group may be in any desired position) such as cyclohexanediol, methylcyclohexanediol, and the like; dihydric (alkyl)aryl alcohols having from 2 to 40 carbon atoms (in which the alkyl group may be linear or branched, and the alkyl group and the hydroxyl group may be in any desired position) and the like such as benzenediol (catechol, and the like), methylbenzenediol, ethylbenzenediol, butylbenzenediol (p-tert-butylcatechol, and the like) dibutylbenzenediol (4,6-di-tert-butylresorcinol, and the like), 4,4'-thiobis(3-methyl-6-tert-butylphenol), 4,4'-butylidenebis(3-methyl-6-tert-butylphenol), 2,2'-methylenebis(4-methyl-6-tert-butylphenol), 2,2'-thiobis(4,6-di-tert-butylresorcinol), 2,2'-methylenebis(4-ethyl-6-tert-butylphenol), 4,4'-methylenebis(2,6-di-tert-butylphenol), 2,2'-(3,5-di-tert-butylhydroxy)propane, 4,4'-cyclohexylidenebis(2,6-di-tert-butylphenol), and the like; p-tert-butylphenol/formaldehyde condensate, p-tert-butylphenol/acetaldehyde condensate, and the like; and their mixtures.

Of these dialcols, preferred to be used are ethylene glycol, propylene glycol, neopentyl glycol, 1,4-butanediol, 1,5-pentanediol, neopentyl glycol, 1,6-hexanediol, 2-methyl-2,4-pentanediol, 2-ethyl-2-methyl-1,3-propanediol, 1,7-heptanediol, 1,8-octanediol, 1,9-nonanediol, 1,10-decanediol, 1,11-undecanediol, 1,12-dodecanediol, and the like, from the viewpoint of capable of more effectively reducing the friction at the sliding face. In addition, high-molecular-weight hindered alcohols having a molecular weight of not less than 300, preferably not less than 400 such as 2,6-di-tert-butyl-4-(3,5-di-tert-butyl-4-hydroxybenzyl)phenyl alcohol are also preferred from the viewpoint of being hardly volatile even at high temperature conditions (for example, in a sliding condition in an internal-combustion engine or the like) and excellent in heat resistance, being capable of exhibiting a friction reduction effect and providing an excellent antioxidation stability.

Tri- and higher polyalcohols are concretely those having three or more hydroxyl groups. In general, tri- to deca-alcohols, preferably tri- to hexa-alcohols are used. Examples of these components are trimethylolalkanes such as glycerin, trimethylolethane, trimethylolpropane, trimethylolbutane; as well as erythritol, pentaerythritol, 1,2,4-butanetriol, 1,3,5-pentanetriol, 1,2,6-hexanetriol, 1,2,3,4-butanetetrol, sorbitol, adonitol, arabitol, xylitol, mannitol; and their polymers or condensates (e.g., glycerin dimers to octamers and the like such as diglycerin, triglycerin, tetraglycerin and the like; trimethylolpropane dimers to octamers and the like such as ditrimethylolpropane; pentaerythritol dimers to tetramers and the like such as dipentaerythritol and the like; sorbitan; condensates such as sorbitol/glycerin condensate (including intramolecular condensates, intermolecular condensates, and self-condensates), and the like.

Saccharides such as xylose, arabitol, ribose, rhamnose, glucose, fructose, galactose, mannose, sorbose, cellobiose, mantose, isomaltose, trehalose, sucrose and the like are also usable.

Of these tri- and higher polyalcohols, more preferred are polyalcohols of tri to hexa-alcohols such as glycerin, trimethylolalkanes (e.g., trimethylolethane, trimethylolpropane, trimethylolbutane), pentaerythritol, 1,2,4-butanetriol, 1,3,5-pentanetriol, 1,2,6-hexanetriol, 1,2,3,4-butanetetrol, sorbitol, sorbitan, sorbitol/glycerin condensate, adonitol, arabitol, xylitol, mannitol, and the like, and their mixtures; and even more preferred are glycerin, trimethylolethane, trimethylolpropane, pentaerythritol, sorbitan and their mixtures. Especially preferred are polyalcohols having a hydroxyl group content of not less than 20 %, preferably not less than 30 %, more preferably not less than 40 %. Polyalcohols that are higher than hexa-alcohols will too much increase the viscosity.

The above-mentioned lubricant containing hydroxyl group is further blended with one or combination of plural kinds selected from an ashless dispersant, an abrasion preventing agent or extreme pressure agent, a metal-based cleaning agent, an antioxidant, a viscosity index improving agent, a friction modifier, an antirusting agent, a nonionic surfactant, a demulsification agent, a metal deactivator, a defoaming agent, and the like, thereby to be improved in required performances.

The low-friction sliding mechanism having the above-mentioned configuration, according to the present invention exhibits a friction coefficient of smaller than 0.02, preferably smaller than 0.01 in a sliding contacting condition under a boundary lubrication which exhibits a friction coefficient of 0.1 to 0.14 at a sliding face formed between steel and steel in the presence of an engine oil.
Here, typical examples of the engine oil is a 5W-30SF engine oil and the like which do not contain a friction modifier such as MoDTC and the like.
Additionally, examples of the above-mentioned steel are SNC415, SNC815 SNCM220, SNCM415, SNCM420, SNCM616, SNCM815 SCr415, SCr420, SCM415, SCM418, SCM420, SCM421, SCM822, SMn420, SMnC420 (according to JIS), and the like; however, the above-mentioned steel is not limited to these.

### EXAMPLE

Hereinafter, the present invention will be discussed with reference to Examples and Comparative Examples; however, the present invention is not limited to these Examples.

### (Examples 1 to 9, and Comparative Examples 1 to 3)

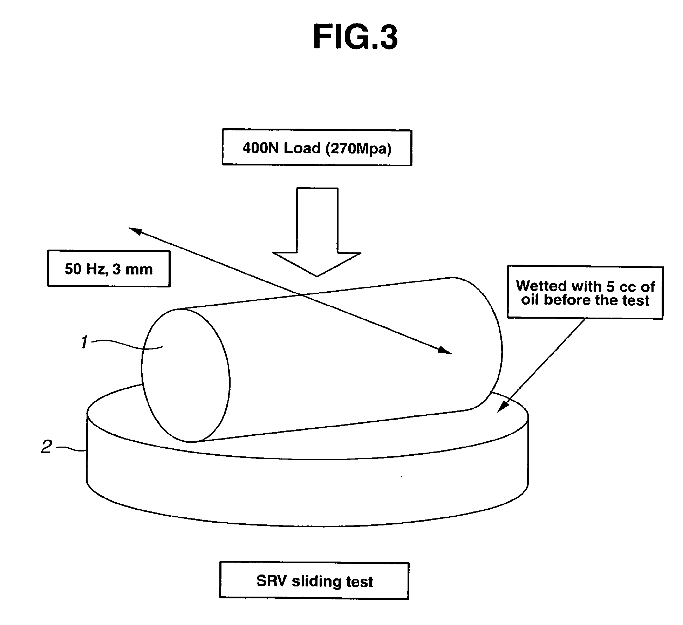

As shown in Fig. 3, as a sliding mechanism of each Example, a reciprocating sliding friction tester was used in which a reciprocating pin was pressed on a fixed disc plate wetted with a lubricating oil. At this time, a load is 400 N, the pin had a dimension of 22 mm x 18 mm diameter, and a plate had a dimension of 8 mm x 24 mm.
Additionally, friction sliding specimens of respective Examples were produced according to the specifications of materials as shown in Table 1 mentioned below.

The plate was formed of SCM415 carburized steel and of cemented carbide in a part of Examples.
Additionally, 5 ml of a lubricant shown in Table 1 was dropped on the obtained plate in such a manner that the surface of the plate was uniformly wetted with the lubricant.
In Examples 1 to 9 and Comparative Examples 1 and 2, glycerol 100 % was used as the lubricant.
In Comparative Example 3, a lubricant used was prepared by adding 1.0 % of GMO (glycerol monooleate) to PAO (polyα-olefin) as a lubricant base oil.
In Comparative Examples 4 and 5, a 5W-30 engine oil was used as the lubricant.

The pin was formed of a SUJ2 (according to JIS) heat-treated material and had a finished surface on which a variety of coatings were formed by PVD treatments.
In Table 1, "a-C" indicates amorphous carbon, in which a DLC having a hardness of lower than 2000 Hv was coated by a UBM (Unbalanced Magnetron Sputtering) process, while a DLC having a hard DLC having a hardness of not lower than 2000 Hv was coated by an arc ion plating process.

Additionally, the surface hardness and the surface roughness in Table 1 are values which were obtained after the final finishing, i.e., after the finishing for the specimen with no coating, and after the coating for the specimen with coating.

**[Reciprocating sliding friction test]**

| | |
|---|---|
| Lubricating oil supply manner | :No supply from outside |
| Plate temperature | :80 °C |
| Maximum Hertz's pressure | :270 MPa |
| Amplitude of reciprocating movement | :3 mm |
| Frequency of reciprocating movement | :50 Hz |
| Test time | :15 min |

**TABLE 1**

| Example | Pin-on-disc materials | | | | Film thickness µm | | Surface hardness | | Surface roughness Ra µm | | Lubricant specification | Friction coefficient |
|---|---|---|---|---|---|---|---|---|---|---|---|---|
| | Plate | | Pin | | Plate | Pin | Plate Hv | Pin Hv | Plate | Pin | Lubricant used | |
| | Base material | Coating | Base material | Coating | | | | | | | | |
| Example 1 | SCM415 carburized | a-C | SUJ2 heat-treated material | a-C | 0.7 | 1.1 | 1500 | 1600 | 0.03 | 0.03 | Glycerol | 0.009 |
| Example 2 | SCM415 carburized | a-C | SUJ2 heat-treated material | a-C | 0.8 | 1.8 | 1600 | 1800 | 0.03 | 0.03 | Glycerol | 0.008 |
| Example 3 | SCM415 carburized | a-C | SUJ2 heat-treated material | a-C | 0.8 | 0.9 | 1600 | 1500 | 0.05 | 0.05 | Glycerol | 0.008 |
| Example 4 | SCM415 carburized | a-C | SUJ2 heat-treated material | ta-C | 0.9 | 0.9 | 1600 | 2800 | 0.05 | 0.05 | Glycerol | 0.008 |
| Example 5 | SCM415 carburized | ta-C | SUJ2 heat-treated material | ta-C | 1.1 | 0.9 | 2900 | 2800 | 0.04 | 0.05 | Glycerol | 0.007 |
| Example 6 | SCM415 carburized | ta-C | SUJ2 heat-treated material | ta-C | 1.1 | 0.8 | 2900 | 2700 | 0.05 | 0.02 | Glycerol | 0.007 |
| Example 7 | SCM415 carburized | ta-C | SUJ2 heat-treated material | ta-C | 0.9 | 1.1 | 2800 | 2900 | 0.05 | 0.03 | Glycerol | 0.007 |
| Example 8 | Cemented carbide WC-Co | ta-C | SUJ2 heat-treated material | ta-C | 0.3 | 0.9 | 2800 | 3500 | 0.05 | 0.10 | Glycerol | 0.007 |
| Example 9 | Cemented carbide WC-Co | ta-C | SUJ2 heat-treated material | ta-C | 0.7 | 0.3 | 3200 | 2900 | 0.05 | 0.04 | Glycerol | 0.007 |
| Comparative example 1 | SCM415 carburized | a-C | SUJ2 heat-treated material | Nil | 0.8 | | 1600 | 750 | 0.10 | 0.03 | Glycerol | 0.02 |
| Comparative example 2 | SCM415 carburized | ta-C | SUJ2 heat-treated material | Nil | 0.8 | | 2700 | 750 | 0.04 | 0.03 | Glycerol | 0.03 |
| Comparative example 3 | SCM415 carburized | ta-C | SUJ2 heat-treated material | ta-C | 0.9 | 0.8 | 2800 | 2700 | 0.04 | 0.04 | PAO+GMO 1 mass % | 0.02 |
| Comparative example 4 | SCM415 carburized | ta-C | SUJ2 heat-treated material | ta-C | 0.8 | 1.1 | 2700 | 2900 | 0.10 | 0.03 | 5W-30 engine oil | 0.06 |
| Comparative example 5 | SCM415 carburized | Nil | SUJ2 heat-treated material | Nil | | | 710 | 750 | 0.05 | 0.03 | 5W-30 engine oil | 0.14 |

| | | | | | | | | | | | | |
|---|---|---|---|---|---|---|---|---|---|---|---|---|
| Number indicates mass % *PAO: Poly Alpha-Olefin *GMO: Glycerol monooleate | | | | | | | | | | | | |

As depicted in Table 1, in the cases that sliding was made under the combination of the coating film obtained in Examples 1 to 9 and the lubricant, an excellent ultra-low friction called "Super-low friction" at which the friction coefficient was lower than 0.01 was exhibited in any case.
In the cases (Comparative Examples 1 and 2) that sliding was made under the combination of a steel material and a steel material (as base materials) either one of which was without coating of DLC, and in the cases (Comparative Examples 3 and 4) that sliding was made under the combination of the specimens with the lubricant containing no hydroxyl group, the friction coefficient could not lower below 0.01.
As understood from Comparative Example 5, the sliding mechanisms of Examples 1 to 9 which were within the preferable ranges of the present invention lower two digits in friction coefficient as compared with a case that sliding was made under a widely used combination of sliding materials of steel-to-steel and an engine oil.

Additionally, in Examples 1 to 9, it was confirmed that no problem arises in shape of the plates and the pins after the test, and the specimens were very excellent in abrasion resistance.
It was confirmed that Examples 5 to 9 using the hard DLC (ta-C based) formed by the ion plating process were further improved in friction reduction effect as compared with Examples 1 to 4 using the relatively soft DLC material coated by the UBM process.
Accordingly, it was confirmed that the thin film formed of the ta-C based DLC material providing a high friction reduction effect was more effective as a DLC thin film.
Thus, a remarkable friction reduction effect can be expected to all mechanical sliding parts. For example, a remarkable effect in direct connection with a fuel economy improvement for an automotive engine can be obtained.

### BRIEF DESCRIPTION OF THE DRAWINGS

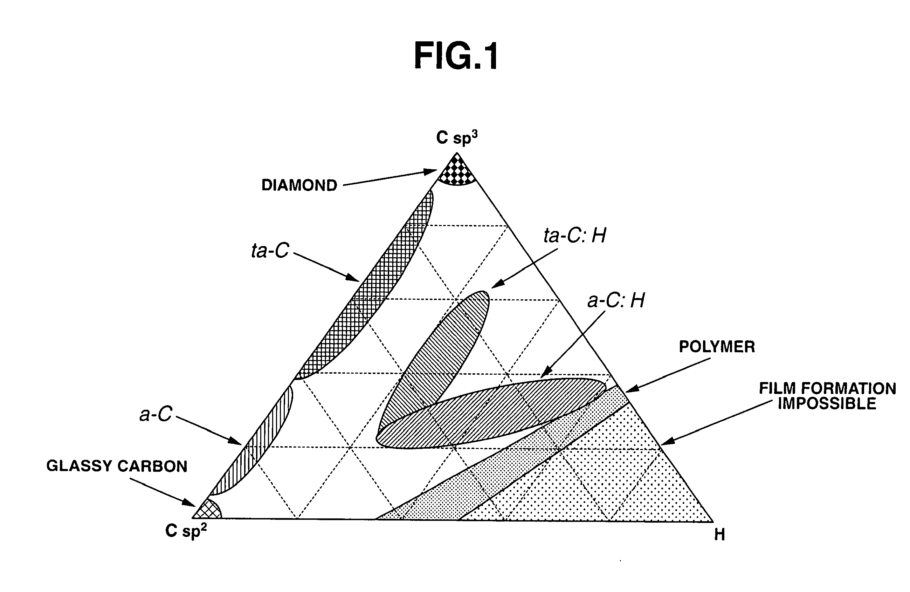

[Fig. 1] is an explanatory view showing the ranges of a a-C based material and a ta-C based material.
[Fig. 2] is a schematic illustration of an organic compound of a low shearing stress.
[Fig. 3] is a rough perspective view showing a reciprocating sliding type friction testing method.

### EXPLANATION OF REFERENECE NUMERALS

- 1: pin
- 2: plate

## Claims

1. A low-friction sliding mechanism comprising sliding members which respectively have hard carbon thin films between which a sliding face is formed, and a lubricant containing glycerol, existing at the sliding face.

2. A low-friction sliding mechanism comprising sliding members which respectively have hard carbon thin films between which a sliding face is formed, and a lubricant containing hydroxyl group, existing at the sliding face,
wherein a friction coefficient of smaller than 0.02 is exhibited in a sliding contacting condition under a boundary lubrication which exhibits a friction coefficient of 0.1 to 0.14 at a sliding face between steels in presence of an engine oil.

3. A low-friction sliding mechanism as claimed in Claim 1 or 2, wherein the hard carbon thin film is a diamond-like carbon thin film formed of amorphous carbon (a-C) and/or tetrahedral carbon (ta-C).

4. A low-friction sliding mechanism as claimed in any one of Claims 1 to 3, wherein the hard carbon thin film has a hardness of 1500 to 5000 Hv in micro-Vickers hardness under a load of 10 g.

5. A low-friction sliding mechanism as claimed in any of Claims 1 to 4, wherein the hard carbon thin film has a hardness of 2000 to 3500 Hv in micro-Vickers hardness under a load of 10 g.

6. A low-friction sliding mechanism as claimed in any of Claims 1 to 5, wherein the hard carbon thin film has a film thickness of 0.3 to 2.0 µm.

7. A low-friction sliding mechanism as claimed in any of Claims 1 to 6, wherein the hard carbon thin film has a film thickness of 0.5 to 1.5 µm.

8. A low-friction sliding mechanism as claimed in any of Claims 2 to 7, wherein the lubricant containing hydroxyl group is one of alcohols.

9. A low-friction sliding mechanism as claimed in any of Claims 2 to 8, wherein the lubricant containing hydroxyl group is glycerol.

10. A low-friction sliding mechanism as claimed in any of Claims 1 to 9, wherein hydrogen group and hydrogen group face each other to form a sliding interface of a tribo-film, at the sliding face.

11. A low-friction sliding mechanism as claimed in Claim 10, wherein the hydrogen group is a part of the lubricant.
